# EUROPEAN PATENT APPLICATION

(11) **EP 1 650 739 A2**
(43) Date of publication of application: **26.04.2006**
(21) Application number: 05076949.6
(22) Date of filing: 25.08.2005
(51) Int. Cl.: G09G 3/36, G09G 3/32

(54) **Intelligent lighting module, lighting or display module system and method of assembling and configuring such a lighting or display module system**

(30) Priority: 07.10.2004 US 616200 P
(71) Applicant: Barco, naamloze vennootschap., 8500 Kortrijk (BE)
(72) Inventor: Thielemans, Robby, 9810 Nazareth (BE); Devos, Bruno, 9870 Zulte (BE); Van Hille, Herbert, 85737 Ismaning (DE)
(74) Representative: Donné, Eddy

(57) **Abstract**

The present invention is a generic emissive intelligent display module that displays uniform hardware and power requirements, is capable of being formed into seamless display system, and is capable of displaying video or providing standard digital lighting technology in a single module. Intelligent lighting module possesses an input for power, an input for serial data, and an input for communications data. The intelligent lighting module further includes a control board and a display board. The control board includes display logic, power regulation, memory, display logic, and a display buffer. The display board includes a drive buffer, an array of drivers, and an array of lighting elements. The components of an intelligent lighting module assembly include front optics, a display assembly with a mechanical interface for front optics, a control board assembly, a chassis, a heat sink, a cooling fan, a cable connector, a fan cover, and a fixation interface for use between the fan cover and the chassis. A system using intelligent lighting modules includes a plurality of intelligent lighting module assemblies, a video source, a lighting console, and a lighting controller. A method of use of an intelligent lighting module in accordance with the invention includes steps of defining the display system, assembling components, assembling the display system, linking display system components, linking the control bus, and auto-configuration.

## Description

### BACKGROUND OF THE INVENTION

### 1. Field of the Invention

The present invention relates to a generic emissive display module that possesses uniform hardware and power requirements and is capable of being formed into a seamless display. In particular, the present invention relates to a self-regulating, high-intensity lighting module that can be packaged for different applications or markets and that is capable of displaying standard video or of providing standard digital lighting technology in a single module.

### 2. Discussion of the related art.

High-intensity light sources, such as incandescent, fluorescent, and halogen lamps, have been long used in many large-scale applications, such as large public information displays, outdoor stadium displays, and theatrical lighting systems. Originally, large manually-operated switches and dimmers were located near the lamps to control the illumination of many large-scale lighting applications. Later, lamps were remotely operated by use of electronic dimmers that employ a low voltage direct current (DC) to control the lamps' high voltage power. Most recently, however, digitally controlled illumination systems have been developed in which a network of individual lights is controlled by a central computer controlled console. Such illumination systems are widely used today in, for example, theatrical lighting systems. In 1986, the U.S. Institute of Theatre Technology (USITT) developed the DMX512 protocol as a standard digital interface between dimmers and computer control consoles. In the DMX512 protocol, each lamp has a digital address and responds to the digital commands sent on a control cable to this address. A lamp may possess multiple addresses. For example, a color changing light may have one address to set the mode of the lamp (on/off/sound activated), another address to select the color, and a third address to set the speed at which the lamp changes the color. The DMX512 protocol is capable of controlling up to 512 addresses per each lighting group that is referred to as a "universe." The DMX512 protocol has allowed uniformity in programming digital lighting; however, a custom hardware setup that uses a variety of lamps is often created each time a lighting system is needed. Often, lamps have different power requirements: in some cases, they require external regulation; in other cases, they require high voltage, unregulated power supplies. Thus, what is needed is a self-regulating, high-intensity lighting module that can be packaged for different applications or markets, for example, for architectural lighting, for retail advertising, or for traditional theatrical lighting. Therefore, what is further needed is a generic building block light source that possesses uniform hardware and power requirements and is capable of being formed into seamless display.

In a separate area of development, projection systems have long been used to display large-scale moving pictures. The first commercial applications of large-scale video displays were limited to large arrays of television monitors. Relatively recent advances in the manufacture of light emitting diodes (LEDs) have made them an attractive light source for large-scale video displays. Large-scale video displays are now being used for sports stadiums, race tracks, arenas, coliseums, and concert halls. Therefore, the market is demanding lighter, cheaper, and larger displays that are easy to install, maintain, and disassemble, especially for use in temporary venues; these are market specifications that are not possible to achieve in the older technologies. Additionally, in many large-scale applications, for example, in large concert halls or stadium music events, both video and lighting effects are desired. However, different display elements are generally needed for large-scale video versus large-scale lighting, in order to create the desired effects. Therefore a large-scale system that is capable of generating both video and digitally controlled lighting is needed.

An example of a system that combines video and digitally controlled lighting system is found in reference to world application WO9931560, entitled, "Digitally controlled illumination methods and systems." The application WO9931560 details processor-controlled LED lighting system, including kinetic illumination, precision illumination, a "smart" light bulb, an entertainment lighting system, a power/data protocol, a data delivery track, lighting components, and sensor/feedback applications. In one embodiment of the invention, the lighting control signal can be embedded in any conventional electronic transmission signal, for example, music, compact disc, television, videotape, video game, computer network, broadcast, cable, broadband, or other communications signal. Therefore, for example, the lighting control signal may be embedded into an entertainment signal, for example, a television signal, so that, when the television signal is processed, a portion of the bandwidth of the television signal can control lighting. For example, in this embodiment, the color and intensity of room lights, as well as other lighting effects, may be directly controlled through a television signal. Thus, a television signal may instruct the room lights to dim at certain points during the presentation, to strobe to different colors at other points, and to flash at other points.

However, the invention requires a decoder in order to split the incoming combined signal into a separate entertainment signal and lighting control signals. Subsequently, a lighting block that is used only for illumination purposes and an entertainment device that can be used only to display video process these signals. Therefore, WO9931560 is limited, in that it requires the use of separate modules for video display or lighting. Thus, what is needed is a device capable of providing both standard video and standard digital lighting technology in a single module.

### SUMMARY OF THE INVENTION

It is an object of this invention to provide a self-regulating, high-intensity lighting module that can be packaged for different applications or markets.

It is another object of this invention to provide a generic building block light source that possesses uniform hardware and power requirements and is capable of being formed into seamless display.

It is yet another object of this invention to provide a lighting element that converges standard video and standard digital lighting technology in a single module.

To this end the invention relates in the first place to an intelligent lighting module for use in a lighting or display module system which is composed of an array of intelligent lighting modules, wherein each of said intelligent lighting modules is provided with a display board with an array of individual pixel lighting elements and with a control board capable of controlling serial input data from a video source for displaying video as well as of controlling digital communication input data from a lighting console for creating digital lighting effects.

Such an intelligent lighting module according to the invention allows building a large-scale system that is capable of generating both video and digitally controlled lighting.

Following a preferred embodiment the lighting elements of the intelligent lighting modules are light emitting diodes (LED), or liquid crystal display pixels (LCD) and the intelligent lighting modules have a form and dimensions such that they can be assembled together with other intelligent lighting modules to build a seamless display.

This allows for lighter, cheaper, and larger displays that are easy to install, maintain, and disassemble, especially for use in temporary venues.

Preferably the intelligent lighting module is provided with a power regulation so that the lighting module with the above mentioned features constitutes a generic building block light source that possesses uniform hardware and power requirements and is capable of being formed into seamless display.

In the second place the invention relates to a lighting or display module system which is composed of a plurality of intelligent lighting modules according to the invention, wherein said lighting modules are linked by an interconnect which is connected to a lighting controller which in turn is connected to a video source and/or to a lighting console.

In the third place the invention also relates to a method of building a lighting or display system according to the invention, including the steps of :
- defining the lighting or display system by defining the system parameters, including the number of intelligent lighting modules and addresses for each,
   a support framework for said intelligent lighting modules, the front optics to be used on each of the intelligent lighting modules;
- assembling the intelligent lighting modules, such as assembling the front optics into the intelligent lighting modules;
- assembling the lighting or display system, including assembling intelligent lighting modules into the support framework of said lighting or display system and installing the lighting controller, a video source and/or a lighting console.
- linking display system components like the intelligent lighting modules, the lighting controller, the video source and/or the lighting console;
- auto-configuring during which the intelligent lighting modules are auto-addressed, auto-positioned and configured, so that they can generate the lighting required by the system application, whereby the lighting console detects the number of intelligent lighting modules contained in the lighting or display module system and sends the appropriate control information including module installation parameters, such as the position of the module in the large-scale display, the module orientation, and the module viewing angle.

### BRIEF DESCRIPTION OF THE DRAWINGS

In order to better explain the characteristics of the invention, the following preferred embodiment of an intelligent lighting module and of a lighting and display module system according to the invention are described as an example only without being limitative in any way, with reference to the accompanying drawings, in which:
Figure 1 illustrates a functional block diagram of an intelligent lighting module in accordance with the invention;
figures 2A and 2B illustrate front and rear perspective views, respectively, of an intelligent lighting module assembly in accordance with the invention;
figure 3 illustrates an exploded rear view of an intelligent lighting module assembly in accordance with the invention;
figure 4 illustrates a block diagram of an intelligent lighting module system in accordance with the invention;
figure 5 is a flow diagram of a method of using an intelligent lighting module system in accordance with the invention.

### DESCRIPTION OF THE PREFERED EMBODIMENT

The present invention relates to a generic lighting module that possesses uniform hardware and power requirements and is capable of being formed into seamless display. In particular, the present invention relates to a self-regulating, high-intensity lighting module that can be packaged for different applications or markets and is capable of displaying standard video or providing standard digital lighting technology in a single module.

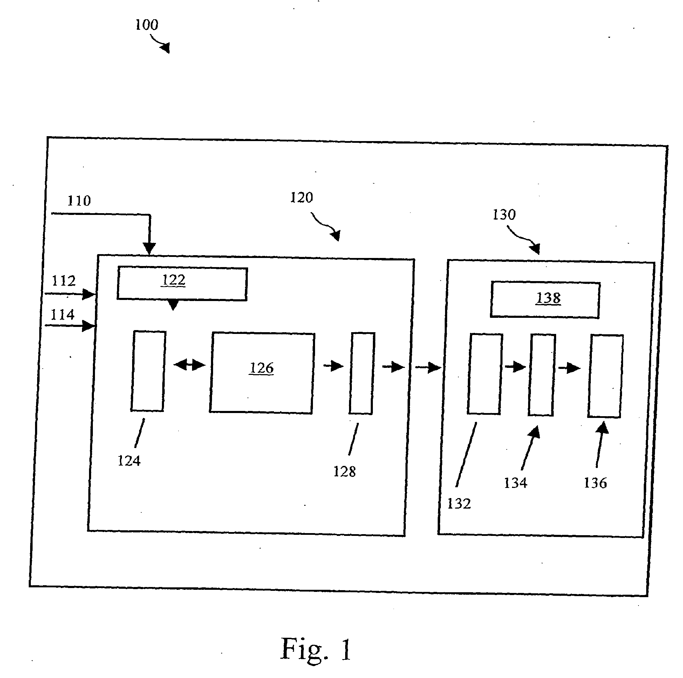

Figure 1 illustrates a functional block diagram of intelligent lighting module 100 in accordance with the invention. Intelligent lighting module 100 includes an input for power 110, an input for serial data 112, an input for communications data (comm data) 114, a control board 120, and a display board 130. Control board 120 further includes a regulation 122 for power, a memory 124, a display logic 126, and a display buffer 128. Display board 130 further includes a drive buffer 132, an array of drivers 134, an array of lighting elements 136, and a sensor 138.

Input for power 110 is a standard, unregulated or regulated power supply for intelligent lighting module 100, in the present example, + 48V DC. However, other implementations of power 110 are possible and include AC, for example, 110V AC or 220V AC.

Serial data 112 contains the display image data, for example of a video source, which comprise for example the pixel location address, and the value for the red, green, and blue (RGB) components of the pixel color; however, numerous other color definitions and standards are possible for serial data 112. Serial data 112 is updated according to the display refresh rate, as is well known to those skilled in the art.

Communications data 114 is a digital serial input, for example of a lighting console, with for example DMX512 protocol data, as is well known to those skilled in the art that controls digital lighting effects, such as switching, dimming, and fading. Other communication protocols are possible, including custom lighting protocols. For further information regarding a custom lighting protocol, we refer to another provisional application in the name of the same applicant, entitled, "System for and method of providing a common protocol for lighting and video devices."

Control board 120 provides all the power regulation, processing capabilities, digital memory, and electronic buffering functions for intelligent lighting module 100.

Regulation 122 provides all the power conversion and regulation functions required to produce internal source of power for all the electronic devices of intelligent lighting module 100. Memory 124 within control board 120 includes standard electronic components, such as "programmable read-only memory" (PROM) and "random access memory" (RAM). The content of Memory 124 contains such data as hardware configuration code, executable code, look-up tables, display data, ambient environmental data, and the installation controller. The installation controller contains data for the unique installation parameters of intelligent lighting module 100 that affect the operation of intelligent lighting module 100 such as the height of the module in the large-scale display, the module orientation, and the module viewing angle. Display logic 126 includes standard electronic components, for example, a field programmable gate array (FPGA). Display logic 126 provides all the digital processing capabilities necessary for the correct operation of intelligent lighting module 100. Display buffer 128 includes common electronic components, such as tri-state latches, tri-state line drivers, and electronic filtering components, such as capacitors (not shown).

Display board 130 provides the display lighting and the support functions necessary for its operation. Drive buffer 132 input parallel data from control board 120 and decode and latch the lighting data. Drivers 134 include the standard display drivers necessary to illuminate lighting elements 136, and are, for example, constant current drivers that are commonly used for light emitting device (LED) displays or constant voltage drivers, used for liquid crystal displays (LCDs). Lighting elements 136 contain an array of individual pixel elements (not shown) that comprise the display, for example, an array of inorganic or organic light emitting diodes (LEDs or OLEDs) or an LCD. Sensor 138 monitors the internal environmental conditions of intelligent lighting module 100, for example light and temperature, for display intensity processing by control board 120.

In operation, intelligent lighting module 100 receives pixel image data on serial data 112, display control data on communications data 114, and display power on power 110. Power 110 and communications data 114 may originate, for example, from a controller (not shown). Further to this example, serial data 112 may originate from this controller or from another intelligent lighting module 100. Display logic 126 inputs serial data 112 and then "deserializes" it in order to produce parallel pixel data. Serial data 112 may not be transmitted in the order of the sequential pixel addresses; therefore, display logic 126 reorders the parallel pixel data and stores it in memory 124 in the order of sequential pixel addresses. Further, the order of sequential address locations in memory 124 may not be in an order that corresponds to the sequential pixel locations of lighting elements 136. Therefore, to display an image, display logic 126 determines a display drive order from a look-up table stored in memory 124 that is uploaded via communications data 114 upon power-up.

Display logic 126 then latches the parallel pixel data that correspond to contiguous pixel locations onto drive buffer 132. Drivers 134 then illuminate the corresponding pixels of lighting elements 136 to produce a single image at the display rate.

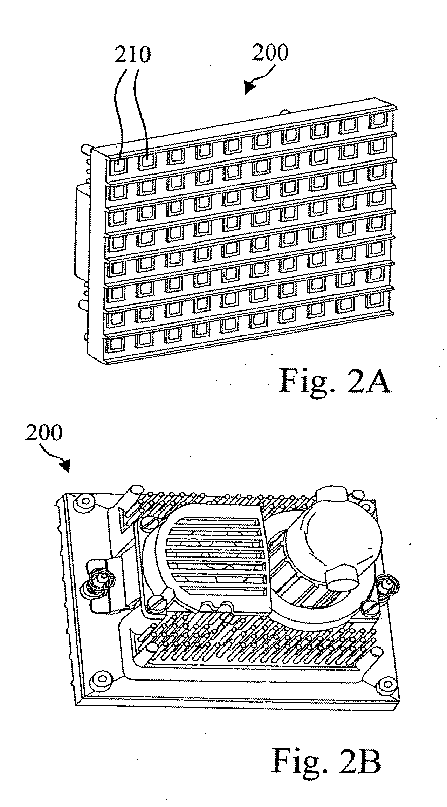

Figures 2A and 2B illustrate front and rear perspective views, respectively, of an intelligent lighting module assembly 200. Intelligent lighting module assembly 200 is suitable for use as an autonomous display, or, alternatively, may operate within a set of intelligent lighting module assemblies 200 to form a larger display (not shown). Intelligent lighting module assembly 200 is, for example, an 8 x 11 planar matrix assembly of emissive lighting elements 210. A large-scale display (not shown), is formed of a plurality of intelligent lighting module assemblies 200 to create, for example, a display that covers an entire wall. For further information regarding large-scale displays, we refer to the description in the present provisional application, entitled, "Improved display and corresponding support, emissive lighting display modules Mechanical packaging and support frameworks for lighting modules and packaging for such display modules."

In operation, a plurality of lighting module assemblies 200 are interconnected to form an overall large-scale display (not shown) that is operated, for example, by means of a display controller (not shown).

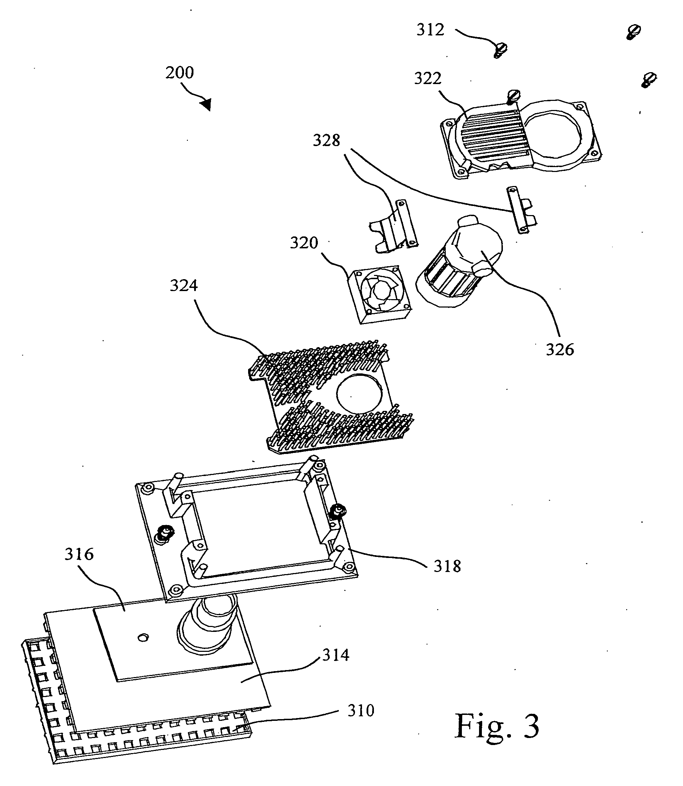

Figure 3 illustrates an exploded rear view of intelligent lighting module assembly 200 in accordance with the invention. Intelligent lighting module assembly 200 includes a front optics 310, a display board assembly 314 that includes a mechanical interface for attachment of front optics 310, a control board assembly 316, a chassis 318, a heat sink 324, a cooling fan 320, a fixation interface 328, a fan cover 322, and bolts 312. Cable connector 326 is part of the cable (not shown in figure 3) and is connected to the connector on the control board assembly 316.

Front optics 310 is a protective lens cover for intelligent lighting module assembly 200. Front optics 310 encases, for example, an 8 x 11 planar matrix assembly of emissive lighting elements 210; however, front optics 310 is not limited to the present example and may accommodate a variety of geometries and hold various numbers of emissive lighting elements 210 for different applications. Further, the lens design of front optics 310 determines the optical quality of emissive lighting elements 210; for example, front optics 310 that possess a small emissive cone provide a greater fill factor and result in a better quality video display. Additionally, front optics 310 may be replaced during the lifetime of intelligent lighting module assembly 200, either to maintain the display because of normal wear or damage or to upgrade intelligent lighting module assembly 200 to change the style or performance of the display. For further information regarding optical designs for lighting module assembly 200, we refer to the description in the present provisional application entitled, "System for and method of optically enhancing video and light elements." A mechanical interface (not shown) that includes a structural frame affixes display board assembly 314 and chassis 318 to front optics 310. Display board assembly 314 contains emissive lighting elements 210 and electronic display drivers, as described in the discussion of display board 130 in reference to Figure 1. Display board assembly 314 also provides a mounting structure for control board assembly 316. Control board assembly 316 contains all the intelligence required in order to operate the display from a standard data source that includes control data, i.e., DMX512, and serial display data, i.e., RGB data, as described in the discussion of control board 120 in reference to Figure 1. Control board assembly 316 contains the power regulation capabilities to power the display. Therefore, intelligent lighting module assembly 200 is a lighting element that converges standard video and standard digital lighting technology in a single module. Chassis 318 is the chassis of intelligent lighting module assembly 200 and the physical interface to a mounting structure (not shown). Fan cover 322 holds cooling fan 320 in place on the rear of chassis 318. Fixation interface 328 is the mechanical interface needed to attach the fan cover to the chassis 318, by means of bolts 312. Chassis 318 can be modified to accomplish different packaging geometries; therefore, intelligent lighting module assembly 200 is a self-regulating, high-intensity lighting module that can be packaged for different applications or markets. Heat sink 324 is incorporated in the design for the thermal cooling of the control board assembly 316 and the display board assembly 314.

In operation, control board assembly 316 receives serial display data, display control data, and power from a source, for example, a display controller (not shown), by means of cables (not shown) that connect to cable connector 326, and processes these inputs to activate and modulate the illumination of intelligent lighting module assembly 200 that creates a display or a portion of an overall display. A large-scale display is constructed from an array of intelligent lighting module assemblies 200, for example, a large-scale wall display (not shown).

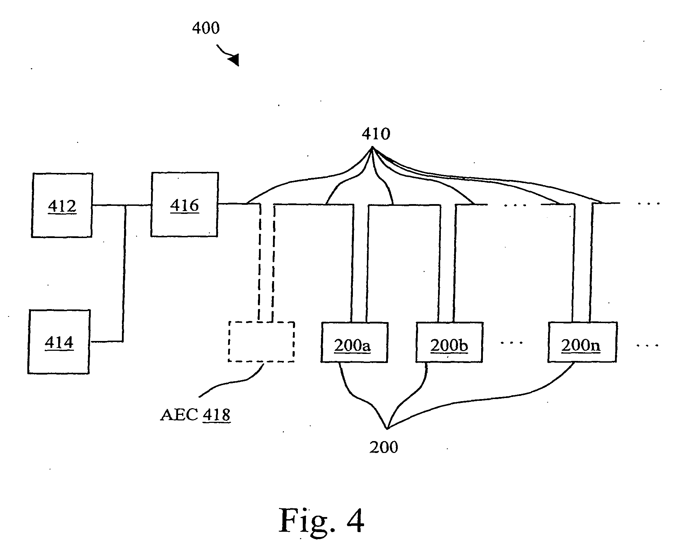

Figure 4 illustrates a block diagram of an intelligent lighting module system 400 in accordance with the invention. Intelligent lighting module system 400 includes, for example, a plurality of intelligent lighting module assemblies 200a, 200b ..., 200n, an interconnect 410, a video source 412, a lighting console 414, a lighting controller 416, and optionally, an ambient environmental controller (AEC) 418. Intelligent lighting module system 400 is not limited to the implementation of the current example; therefore, other lighting system architectures that utilize intelligent lighting module assembly 200 are possible. For further information regarding other lighting system architectures that utilize intelligent lighting module assembly 200, see another provisional application in the name of the same applicant, entitled "System for and method of providing a common protocol for lighting and video devices."

Interconnect 410 is a cable that has multiple conductors and that carries power 110, serial data 112, and communications data 114 to each intelligent lighting module assembly 200 in intelligent lighting module system 400. Video source 412 is a video transmission device, for example, a personal computer display input or a video processor display input, that provides a video feed, for example, SDI or RGB, to lighting controller 416. Lighting console 414 is a computer console that runs the application software used to control and operate intelligent lighting module system 400, in order to produce a variety of lighting effects, for example, brightness, dimming, color changes, and video effects. Lighting console 414 is widely used in, for example, theatrical lighting systems. Lighting controller 416 is a device that provides serial display data and control data directly to intelligent lighting module assemblies 200. Lighting console 414 communicates to lighting controller 416 via control data protocol, i.e., DMX512 protocol. Optionally, ambient environmental controller 418 provides ambient environmental data, including for example, ambient temperature, illumination, and humidity via communications data 114, to intelligent lighting module assemblies 200. In operation, lighting controller 416 receives a video feed from video source 412 and control data, i.e., DMX512 protocol, from lighting console 414 and outputs serial display data and control data to each intelligent lighting module assemblies 200 via interconnect 410. Intelligent lighting module assemblies 200 receive serial display data and control data, including module installation parameters, such as the height of the module in the large-scale display, the module orientation, and the module viewing angle from lighting controller 416 via interconnect 410. In addition and optionally, intelligent lighting module assemblies 200 receive ambient environmental data, from ambient environmental controller 418, via interconnect 410. Each intelligent lighting module assembly 200 uses these signals to illuminate in an array that forms an overall display. A large-scale display is constructed from an array of intelligent lighting module assemblies 200, for example, a large-scale wall display. Therefore, intelligent lighting module assemblies 200 function as a generic building block light source that possesses uniform hardware and power requirements and is capable of being formed into seamless display.

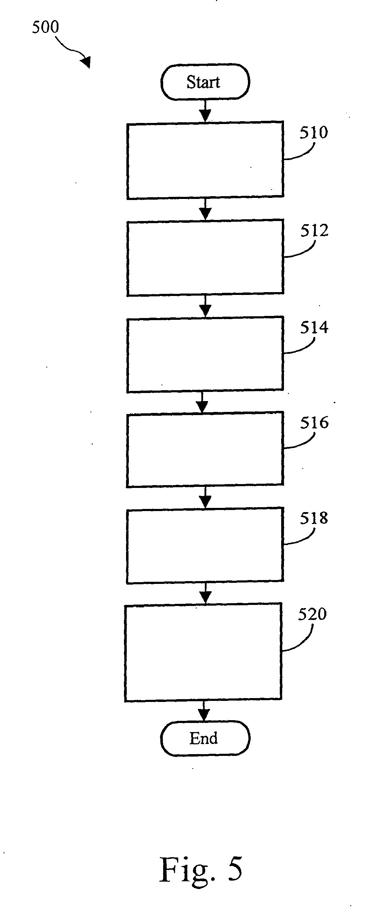

Figure 5 is a flow diagram of a method 500 of using an intelligent lighting module assembly 200 in accordance with the invention. Method 500 includes initial assembly, and automatic configuration of intelligent lighting module system 400 and Figures 1 through 4 are referenced throughout the steps of method 500. Method 500 includes the following steps:

### Step 510: Defining display system

In this step, the system parameters for a display application are defined for intelligent lighting module assembly 200, according to the needs and specifications of the overall display system (not shown). System parameters include, for example, the number of intelligent lighting module assemblies 200 and addresses for each, the support framework (not shown), the mechanical interface to the support framework, and front optics 310. Method 500 proceeds to step 512.

### Step 512: Assembling components

In this step, the components of the system are prepared for installation. For example, front optics 310 is assembled into intelligent lighting module assemblies 200. Method 500 proceeds to step 514.

### Step 514: Assembling display system

In this step, the components of the system are installed in the display system. For example, intelligent lighting module assemblies 200 are assembled into the support framework of the display system. Method 500 proceeds to step 516.

### Step 516: Linking display system components

In this step, intelligent lighting module assemblies 200 are interconnected to each other, in order to provide power, video, and data communication, e.g., by a local area network (LAN) or by a DMX512, throughout the entire display system. Method 500 proceeds to step 518.

### Step 518: Linking communications data

In this step, interconnect 410 is linked to lighting controller 416 in order to provide a source for power, video, and data communication, e.g., LAN or DMX512, to the interconnected display system. Method 500 proceeds to step 520.

### Step 520: Auto-configuring

In this step, intelligent lighting module assemblies 200 are auto-addressed, auto-positioned, and configured, so that they can generate the lighting required by the system application. Lighting console 414, for example, detects the number of intelligent lighting module assemblies 200 which are contained in the display system and sends the appropriate control information including module installation parameters, such as the height of the module in the large-scale display, the module orientation, and the module viewing angle, to intelligent lighting module assemblies 200 via controller 416 and interconnect 410, so that the modules are individually capable of displaying the appropriate information. Further to the example, intelligent lighting module assemblies 200 have enough intelligence to alter the incoming data, i.e., to compensate for ambient temperature; however, the DMX512 data stream on interconnect 410 is not altered. Method 500 ends.

The invention is in no way limited to the methods and embodiments described above and represented in the drawings, but such an intelligent lighting element and lighting or display system according to the invention may be realized in different shapes and dimensions, without departure from the scope of the invention.

## Claims

1. An intelligent lighting module for use in a lighting or display module system which is composed of an array of lighting modules, wherein each of said lighting modules is provided with a display board with an array of individual pixel lighting elements and with a control board capable of controlling serial input data from a video source for displaying video as well as of controlling digital communication input data from a lighting console for creating digital lighting effects.

2. The intelligent lighting module according to claim 1, wherein the lighting elements are light emitting diodes (LED), or liquid crystal display pixels (LCD).

3. The intelligent lighting module according to claim 1, having a form and dimensions such that it can be used together with other similar lighting modules to build a seamless display.

4. The intelligent lighting module according to claim 1, wherein the control board is capable of controlling communication input data in the form of DMX512 protocol data.

5. The lighting module according to claim 1, wherein the control board comprises a power regulation.

6. The intelligent lighting module according to claim 1, wherein the display board and the control board are assembled in an intelligent lighting module assembly including a chassis, a front optics, a mechanical interface for attachment of the front optics, a heat sink, a cooling fan and fan cover.

7. A Lighting or display module system which is composed of a plurality of intelligent lighting modules according to claim 1, wherein said lighting modules are linked by an interconnect which is connected to a lighting controller which in turn is connected to a video source and/or to a lighting console.

8. The lighting or display module system according to claim 7, wherein the interconnect is a cable that has multiple conductors that carries power, serial data and communication data to each lighting module.

9. The lighting or display module system according to claim 7, wherein the video source is a video transmission device such as a personal computer display input or a video processor display unit that provides video feed to the lighting controller.

10. The lighting or display module system according to claim 7, wherein the lighting console is a computer console that runs the application software in order to produce a variety of lighting effects.

11. The lighting or display module system according to claim 7, wherein the lighting console communicates to the lighting controller via a control data protocol like the DMX512 protocol.

12. The lighting or display module system according to claim 7, wherein the lighting controller provides serial display data and control data to the connected intelligent lighting modules via the interconnect.

13. The lighting or display module system according to claim 12, wherein the intelligent lighting modules use the received signals to illuminate in an array that forms an overall display.

14. A method of assembling and configuring a lighting or display system according to claim 7, including the steps of :
- defining the lighting or display system by defining the system parameters, including the number of intelligent lighting modules and addresses for each, a support framework for said intelligent lighting modules, the front optics to be used on each of the intelligent lighting modules;
- assembling the intelligent lighting modules, such as assembling the front optics into the intelligent lighting modules;
- assembling the lighting or display system, including assembling intelligent lighting modules into the support framework of said lighting or display system and installing the lighting controller, a video source and/or a lighting console.
- linking display system components like the intelligent lighting modules, the lighting controller, the video source and/or the lighting console;
- auto-configuring during which the intelligent lighting modules are auto-addressed, auto-positioned and configured, so that they can generate the lighting required by the system application, whereby the lighting console detects the number of intelligent lighting modules contained in the lighting or display module system and sends the appropriate control information including module installation parameters, such as the position of the module in the large-scale display, the module orientation, and the module viewing angle.
